# EUROPÄISCHE PATENTSCHRIFT

(11) **EP 2 710 870 B1**
(45) Veröffentlichungstag und Bekanntmachung des Hinweises auf die Patenterteilung: **17.04.2019**
(21) Anmeldenummer: 13181118.4
(22) Anmeldetag: 21.08.2013
(51) Int. Cl.: A01B 69/00, A01G 17/00

(54) **Gerätesystem für den Einsatz im Wein- und Obstbau**
Device system for use in wine and fruit harvesting
Système d'appareil destiné à être utilisé dans la viticulture et l'arboriculture fruitière

(30) Priorität: 30.08.2012 DE 102012108012
(43) Veröffentlichungstag der Anmeldung: 26.03.2014
(73) Patentinhaber: BRAUN Maschinenbau GmbH, 76829 Landau (DE)
(72) Erfinder:
(74) Vertreter: Bernhardt, Reinhold

(56) Entgegenhaltungen:
- EP-A1- 2 361 496
- EP-A2- 1 290 929
- DE-C1- 3 916 852
- FR-A1- 2 563 970
- FREIMANN R ET AL: "GERAET STEUERT TRAKTOR: OPTIMIERUNGSMOEGLICHKEITEN DER GESPANNFUEHRUNG//IMPLEMENT GUIDED TRACTOR CONTROL: POSSIBLE SYSTEM OPTIMIZATION", VDI BERICHTE, DUESSELDORF, DE, Bd. 1544, 1. Januar 2000 (2000-01-01), Seiten 201-206, XP001247937, ISSN: 0083-5560

## Beschreibung

Die Erfindung betrifft ein Gerätesystem zur Ankopplung an ein im Wein- und Obstbau zwischen Pflanzreihen einsetzbares Geräteträgerfahrzeug gemäß Oberbegriff 1 des Anspruchs 1.

Bekanntermaßen kommen im Wein- und Obstbau Gerätesysteme zum Einsatz, in denen als Geräteträgerfahrzeuge kleine Traktoren dienen, die den verhältnismäßig schmalen Bereich zwischen benachbarten Reihen von Reben- oder Baumpflanzen befahren können. Mit Hilfe der angekoppelten Bearbeitungsgeräte lässt sich auf unterschiedliche Weise der Boden oder die Bepflanzung selbst bearbeiten, wobei die Bearbeitung der benachbarten Pflanzreihen zumeist gleichzeitig auf beiden Seiten des Geräteträgerfahrzeugs erfolgt. Schwankungen des Bodenniveaus, d.h. Abweichungen von der (ggf. geneigten) Bodenebene, sowie Variationen des Abstands der beiden Pflanzreihen zueinander bzw. des Abstands des Geräteträgerfahrzeugs zu den Pflanzen der jeweiligen Pflanzreihe gleicht der Fahrzeugführer durch entsprechende Verstellung der Bearbeitungselemente der Bearbeitungsgeräte aus, indem er die Arbeitshöhe, z.B. eines Pflugschars, und/oder den seitlichen Abstand des Bearbeitungselements zum Geräteträgerfahrzeug verändert.

Nach dem Stand der Technik ist es ferner bekannt, zwecks Erleichterung der Bedienung der Bearbeitungsgeräte durch den Fahrzeugführer Geräteträgerfahrzeuge mit einer automatischen Lenkung auszurüsten, welche das Geräteträgerfahrzeug ohne Zutun des Fahrzeugführers auf der Bahn zwischen den Pflanzreihen hält.

Ein durch Benutzung bekanntes Gerätesystem weist ein am Heck des Geräteträgerfahrzeuge montierbares Bearbeitungsgerät zum Kurzschneiden von Pflanzenbewuchs zwischen den Pflanzreihen auf. Das Bearbeitungsgerät umfasst zwei, unabhängig voneinander seitlich ein- und ausfahrbare Schneidköpfe, die außenseitig jeweils eine sich automatisch an Rebenstämme anlegende Sensorleiste aufweisen. Anhand der jeweiligen Relativposition der Sensorleiste zu dem Schneidkopf wird die jeweilige Ausfahrposition des Schneidkopfs automatisch eingestellt. Um Höheneinstellungen der Schneidköpfe muss sich der Fahrer des Geräteträgerfahrzeugs selbst kümmern.

Gerätesysteme der eingangs genannten Art gehen aus der EP 2 361 496 A1 sowie der DE 39 16 852 C1 hervor. Die Sensoreinrichtungen dieser bekannten Gerätesysteme sind unmittelbar einem Bearbeitungsgeräte oder einer Halterung für ein Bearbeitungsgerät zugeordnet und erfassen Objekte in unmittelbarer Nähe des Bearbeitungsgeräts bzw. der Halterung. Ähnliche Systeme sind in EP 1 290 929 A2 und FR 2 563 970 A1 beschrieben.

Der vorliegenden Erfindung liegt die Aufgabe zugrunde, ein neues Gerätesystem der eingangs erwähnten Art zu schaffen, das eine effizientere Bearbeitung von Pflanzungen im Wein- und Obstbau als nach dem Stand der Technik ermöglicht.

Das diese Aufgabe lösende Gerätesystem nach der Erfindung ist dadurch gekennzeichnet, dass die Sensoreinrichtungen einen Sensor zur Abtastung eines Bereichs in Fahrtrichtung vor dem Geräteträgerfahrzeug unter Erfassung beider Pflanzenreihen und Ermittlung der Positionen der Pflanzenstämme in den Pflanzenreihen in der Bodenebene sowie unter Ermittlung vollständiger Bodenprofile umfassen und dass die Mittel zur automatischen Anpassung ferner eine die Positionsmesswerte und Bodenprofile zwischenspeichernde Steuereinrichtung aufweisen.

Erfindungsgemäß werden die Positionen der Pflanzen in den Pflanzreihen und die Bodenprofile in Fahrtrichtung vor dem Bearbeitungsgerät ermittelt. Vorteilhaft lassen sich die ermittelten Pflanzenpositionen dadurch zur gleichzeitigen Steuerung mehrerer, am Geräteträgerfahrzeug an verschiedenen Stellen angebrachter Bearbeitungsgeräte nutzen. Die Sensoreinrichtungen liefern alle Informationen, um die Position des Bearbeitungselements sowohl in seitlicher Richtung parallel zum Boden als auch senkrecht zur Bodenebene vollautomatisch zu steuern. Abweichungen der Räder des Geräteträgerfahrzeugs von der jeweiligen mittleren Bodenebene können erfasst und die Bearbeitungselemente in Bezug auf das Geräteträgerfahrzeug entsprechend gesteuert werden.

Die erfindungsgemäßen Sensoreinrichtungen sind also zur Erfassung auf das Geräteträgerfahrzeug bezogener Positionen der Pflanzen sowie vollständiger Bodenprofile in Fahrtrichtung vor dem Bearbeitungsgerät und zur Erfassung der seit dem Zeitpunkt der Erfassung der jeweiligen Pflanzenposition und Profile erfolgten Änderung der Position des Geräteträgerfahrzeugs vorgesehen, wobei die Mittel zur automatischen Anpassung Einrichtungen zur Steuerung der Arbeitsposition des Bearbeitungselements anhand der ermittelten Positionen der Pflanzen und ermittelten Änderungen der Position des Geräteträgerfahrzeugs umfassen.

Die Sensoreinrichtungen weisen zweckmäßig wenigstens einen Sensor zur berührungslosen Erfassung der Positionen der Pflanzen auf, insbesondere zur berührungslosen Erfassung der Bodenprofile. Ein solcher Sensor kann zur Erfassung der Positionen der Pflanzen, insbesondere der Bodenprofile, durch Reflektion elektromagnetischer Wellen, z.B. Licht oder/und Radarwellen, vorgesehen sein.

In weiterer Ausgestaltung der Erfindung können die Sensoreinrichtungen neben einem Sensor, der die durch das Geräteträgerfahrzeug zurückgelegte Wegstrecke erfasst, auch einen den Lenkungseinschlag erfassenden Sensor aufweisen. Über den Lenkungseinschlag können ggf. Krümmungen der Wegstrecke erfasst und bei der Berechnung der erforderlichen Einstellungswerte für die Bearbeitungselemente berücksichtigt werden.

In weiterer Ausgestaltung der Erfindung können Sensoreinrichtungen ferner einen bezogen auf die Fahrtrichtung unmittelbar bei dem Bearbeitungsgerät angebrachten Sensor zur Erfassung des Bodenniveaus umfassen, insbesondere zur Erfassung des jeweiligen Abstandes des Bearbeitungselements zum Boden.

Ein solcher Sensor ist zweckmäßig oberhalb einer Radspur angeordnet, so dass ggf. vorhandener Pflanzenbewuchs niedergedrückt und eine eindeutige Erkennung der Bodenoberfläche möglich ist.

Die Sensoreinrichtungen können ferner einen die Lage des Geräteträgerfahrzeugs erfassenden Lagesensor aufweisen. Über Signale eines solchen Lagesensors kann ggf. die Neigung eines Bearbeitungselements in Bezug auf die vertikale Achse des Geräteträgerfahrzeugs gesteuert werden.

Die Einrichtungen zur automatischen Verstellung der Arbeitsposition des Bearbeitungselements verarbeiten vorzugsweise die Signale mehrerer Sensoren gleichzeitig in Echtzeit, so dass auf diese Weise eine Vielzahl von Bearbeitungsgeräten gleichzeitig bedient werden und das Trägerfahrzeug sowohl vorne als auch am Heck sowie in Zwischenachspositionen zusätzlich an den Seiten mit Bearbeitungsgeräten bestückt sein kann.

In einer weiteren Ausführungsform der Erfindung können die genannten Sensoreinrichtungen ferner zur Erfassung der Position der Pflanzen anhand einer Erfassung der Lage entlang der Pflanzreihen verlaufender Spanndrähte oder/und an den Pflanzen angebrachter Markierungen vorgesehen sein. Insbesondere können die Sensoreinrichtungen von den Spanndrähten oder/und Markierungen reflektierte oder aktiv ausgesandte elektromagnetische Wellen erfassen. Als Markierungen kommen z.B. reflektierende Schaltkreise in Betracht, die ggf. am Stamm der Pflanzen angebracht sind.

Die Erfindung wird nachfolgend anhand eines Ausführungsbeispiels und der beiliegenden, sich auf dieses Ausführungsbeispiel beziehenden Zeichnungen weiter erläutert. Es zeigen:
- Fig. 1: ein Geräteträgerfahrzeug mit einem erfindungsgemäßen, an das Fahrzeug ankoppelbaren Gerätesystem in Draufsicht,
- Fig. 2: das Gerätesystem mit dem Geräteträgerfahrzeug von Fig. 1 in einer Seitenansicht,
- Fig. 3: ein Wirkungsschema einer Steuereinrichtung des Gerätesystems von Fig. 1 und 2, und
- Fig. 4: einen in einem Gerätesystem nach der Erfindung verwendbaren Sensor in schematischer Darstellung.

Ein Geräteträgerfahrzeug in Form eines kleinen Traktors 1 weist Vorderräder 2 und 3 sowie Hinterräder 4 und 5 auf. Die Breite des Traktors 1 beträgt in dem gezeigten Ausführungsbeispiel nur 1,20 m, so dass der Traktor zwischen zwei mit Weinreben bepflanzten Pflanzreihen 6 und 7 verfahrbar ist.

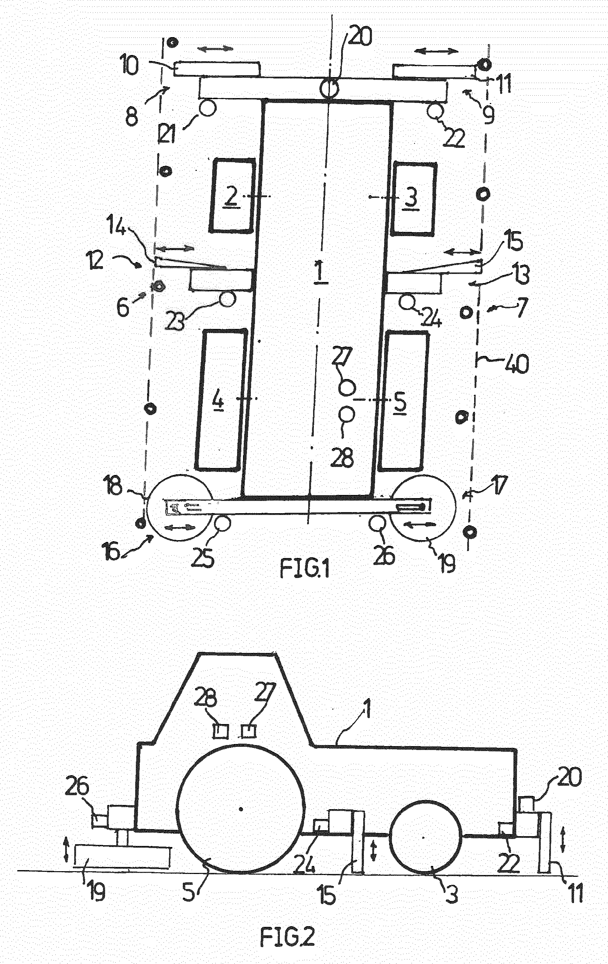

An der Vorderseite sind an den Traktor 1 Bearbeitungsgeräte 8 und 9 mit einem Bearbeitungselement 10 bzw. 11 angekoppelt. Weitere Bearbeitungsgeräte 12 und 13 mit einem Bearbeitungselement 14 bzw. 15 befinden sich in einer Zwischenachsposition. Schließlich sind auch Bearbeitungsgeräte 16 und 17 mit einem Bearbeitungselement 18 bzw. 19 an das Heck des Traktors 1 gekoppelt. Wie in den Fig. 1 und 2 durch Pfeile angedeutet ist, lassen sich die Positionen der Bearbeitungselemente 10,11,14,15,18 und 19 senkrecht zur Fahrtrichtung des Traktors 1 sowohl in horizontaler wie auch vertikaler Richtung verstellen.

An der Vorderseite des Traktors 1 befindet sich ein Sensor 20, der den Bereich in Fahrtrichtung vor dem Traktor 1 z.B. optisch abtastet. Weitere optische oder mechanische Sensoren 21 bis 26 sind bezogen auf die Fahrtrichtung jeweils bei den Bearbeitungsgeräten 8,9,12,13,16 und 17 angeordnet. Die Sensoren 23 bis 26 befinden sich jeweils über der Spur der Vorderräder 2,3 bzw. Hinterräder 4,5.

Am Traktor 1 sind darüber hinaus ein Neigungs- oder Lagesensor 27 sowie ein Sensor 28 zur Erfassung des Fahrweges und/oder des Einschlagwinkels der Lenkung installiert.

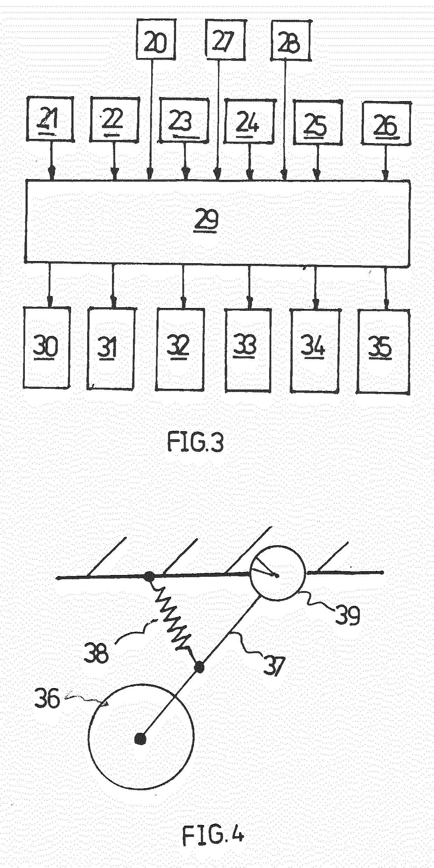

Wie aus Fig. 3 hervorgeht, stehen die Sensoren 20 bis 28 in Verbindung mit einer zentralen Steuereinrichtung 29, die ihrerseits mit (in den Fig. 1 und 2 nicht gezeigten) hydraulischen, pneumatischen oder/und elektromechanischen Einrichtungen 30 bis 35 zur Verstellung der Bearbeitungselemente 10,11,14,15,18 und 19 verbunden ist.

Bei den genannten Bearbeitungsgeräten kann es sich um die üblichen im Wein- und Obstbau, insbesondere zur Bodenbearbeitung, Reben- oder Baumbearbeitung sowie zum Kurzschneiden von Bodenbewuchs eingesetzten Geräte handeln.

Im Bearbeitungsbetrieb befährt der Traktor 1 den schmalen Bereich zwischen den Pflanzreihen 6 und 7, wobei der Traktorfahrer lediglich für die Lenkung des Traktors zu sorgen braucht. Alle mit Hilfe der Bearbeitungsgeräte 8,9,12,13,16 und 17 durchgeführten Bearbeitungsvorgänge, insbesondere erforderliche Einstellungen der Arbeitsposition der Bearbeitungselemente 10,11,14,15,18 und 19, laufen vollautomatisch ab.

Während der Fahrt des Traktors 1 erfasst der Sensor 20, z.B. im Rahmen einer Bildauswertung, die auf z.B. die Sensorposition bezogenen Koordinaten der Rebenstämme in der Bodenebene in den vor dem Traktor liegenden Pflanzreihen 6 und 7, wobei diese Positionskoordinaten von einer gedachten Fluchtlinie 40 der Pflanzreihe abweichen können. Die durch den Sensor 20 laufend ermittelten Positionsmesswerte werden in der Steuereinrichtung 29 zwischengespeichert.

Die Steuereinrichtung 29 empfängt ferner den Fahrweg des Traktors 1 betreffende Messwerte von dem Sensor 28, so dass die Steuereinrichtung 29 die Zeitpunkte bzw. Fahrwege berechnen kann, zu denen bzw. nach denen die jeweiligen Bearbeitungsgeräte 8,9,12,13,16 und 17 in Fahrtrichtung die Positionen der vorher durch den Sensor 20 vermessenen Rebenstämme erreichen. Anhand der so ermittelten Daten kann die Steuereinrichtung 29 Steuersignale berechnen, die eine entsprechende seitliche Verstellung der Bearbeitungselemente 10,11,14,15,18 und 19, bewirken.

Die Sensoren 21 bis 26 liefern der Steuereinrichtung 29 laufend den Abstand der Bearbeitungsgeräte 8,9,12,13,16 und 17 zum Boden betreffende Messsignale, die eine entsprechende Einstellung der jeweiligen Bearbeitungselemente 10,11,14,15,18 und 19 ermöglichen.

Ergänzend zu den Signalen der Sensoren 21 bis 26 kann die Steuereinrichtung 29 Messsignale des Neigungssensors 27 bei der Berechnung von Einstellsignalen für die Höheneinstellung der Bearbeitungselemente 10,11,14,15,18 und 19 verwenden.

Die für die Einstellung des Bodenabstandes maßgebenden Sensoren 21 bis 26 könnten abweichend von dem gezeigten Ausführungsbeispiel auch mit den Bearbeitungselementen 10,11,14,15,18 und 19 selbst verbunden und mit diesen verstellbar sein. Während auch an den Bearbeitungselementen selbst montierte Sensoren optische Sensoren sein können, ließe sich hierzu ein in Fig. 4 schematisch dargestellter Sensor verwenden, der den Boden mechanisch mit Hilfe eines Rades 36 abtastet, das an einem Schwenkhebel 37 drehbar gelagert ist. Der durch eine Feder 38 beaufschlagte Schwenkhebel 37 steht mit einer den Schwenkwinkel erfassenden Winkelmesseinrichtung 39 in Verbindung. Aus dem erfassten Winkel 39 lässt sich die jeweilige Höhe des Bearbeitungselements über dem Boden ermitteln.

Alternativ zu den Sensoren 21 bis 26 könnten die erforderlichen Messungen des Bodenniveaus bereits mit Hilfe des Sensors 20 erfolgen, der im Übrigen zur Ermittlung vollständiger Bodenprofile vor dem Geräteträgerfahrzeug ausgelegt sein könnte.

Über die beschriebenen Verstellmöglichkeiten der Bearbeitungselemente hinaus könnte auch eine Verstellmöglichkeit der Neigung der Bearbeitungselemente in Bezug auf die vertikale Achse des Geräteträgerfahrzeugs möglich sein, die Neigung dieser Bearbeitungselemente könnte dann durch Signale des obengenannten Lagesensors 27 gesteuert werden.

## Patentansprüche

1. Gerätesystem zur Ankopplung an ein im Wein- und Obstbau zwischen Pflanzreihen (6,7) einsetzbares Geräteträgerfahrzeug (1), mit wenigstens einem Bearbeitungsgerät (8,9,12,13,16,17), das ein Bearbeitungselement (10,11,14,15,18,19) aufweist, dessen Arbeitsposition in Bezug auf das Geräteträgerfahrzeug (1) verstellbar ist, und mit Sensoreinrichtungen (20-28) umfassenden Mitteln (30-35) zur vollautomatischen Anpassung der Arbeitsposition des Bearbeitungselements (10,11,14,1,5,18,19) an Änderungen der erforderlichen Arbeitsposition infolge Fortbewegung des Geräteträgerfahrzeugs (1) zwischen den Pflanzreihen (6,7) infolge Abweichungen der Positionen der Pflanzen von der Fluchtlinie (40) der Pflanzreihen (6,7), wobei die Sensoreinrichtungen (20-28) zur Erfassung auf das Geräteträgerfahrzeug (1) bezogener Positionen der Pflanzen und ferner zur Erfassung der seit dem Zeitpunkt der Erfassung der jeweiligen Pflanzenpositionen erfolgten Änderungen der Position des Geräteträgerfahrzeugs (1) vorgesehen sind und wobei die Mittel (30-35) zur automatischen Anpassung Einrichtungen zur Steuerung der Arbeitsposition des Bearbeitungselements (10,11,14,15,18,19) einschließlich Steuerung anhand der ermittelten Änderungen der Position des Geräteträgerfahrzeugs umfassen,
**dadurch gekennzeichnet,**
**dass** die Sensoreinrichtungen (20-28) einen Sensor (20) zur Abtastung eines Bereichs in Fahrtrichtung vor dem Geräteträgerfahrzeug (1) unter Erfassung beider Pflanzreihen (6,7) und Ermittlung der Positionen der Pflanzenstämme in den Pflanzreihen in der Bodenebene sowie unter Ermittlung vollständiger Bodenprofile, und dass die Mittel (30-35) zur automatischen Anpassung ferner eine die Positionsmesswerte und Bodenprofile zwischenspeichernde Steuereinrichtung (29) umfassen.

2. Gerätesystem nach Anspruch 1,
**dadurch gekennzeichnet,**
**dass** die Sensoreinrichtungen (20-28) zur berührungslosen Erfassung der Positionen der Pflanzen, insbesondere berührungslosen Erfassung der Bodenprofile, vorgesehen sind.

3. Gerätesystem nach Anspruch 2,
**dadurch gekennzeichnet,**
**dass** die Sensoreinrichtungen (20-28) zur berührungslosen Erfassung der Positionen der Pflanzen, insbesondere Erfassung von Bodenprofilen, durch Reflexion elektromagnetischer Wellen, z.B. Licht- oder/und Radarwellen, vorgesehen ist.

4. Gerätesystem nach einem der Ansprüche 1 bis 3,
**dadurch gekennzeichnet,**
**dass** die Sensoreinrichtungen (20-28) ferner zur Erfassung der Positionen der Pflanzen anhand einer Erfassung der Lage entlang der Pflanzreihen (6,7) verlaufender Spanndrähte oder/und an den Pflanzen angebrachter Markierungen vorgesehen sind.

5. Gerätesystem nach Anspruch 4,
**dadurch gekennzeichnet,**
**dass** die Sensoreinrichtungen (20-28) zur Erfassung von den Spanndrähten oder/und Markierungen reflektierter oder/und aktiv ausgesandter elektromagnetischer Wellen vorgesehen sind.

6. Gerätesystem nach einem der Ansprüche 1 bis 5,
**dadurch gekennzeichnet,**
**dass** die Sensoreinrichtungen (20-28) einen an der Vorderseite des Geräteträgerfahrzeugs (1), vorzugsweise in der Fahrzeugmitte, angebrachten Sensor (20) umfassen.

7. Gerätesystem nach einem der Ansprüche 1 bis 6,
**dadurch gekennzeichnet,**
**dass** die Sensoreinrichtungen (20-28) einen die durch das Geräteträgerfahrzeug (1) zurückgelegte Wegstrecke und ggf. einen den Lenkungseinschlag erfassenden Sensor (28) aufweisen.

8. Gerätesystem nach einem der Ansprüche 1 bis 7,
**dadurch gekennzeichnet,**
**dass** die Sensoreinrichtungen (20-28) ferner einen bezogen auf die Fahrtrichtung unmittelbar bei dem Bearbeitungsgerät (8,9,12,13,16,17) angebrachten Sensor (21-26) zur Erfassung des Bodenniveaus umfassen.

9. Gerätesystem nach einem der Ansprüche 1 bis 8,
**dadurch gekennzeichnet,**
**dass** die Sensoreinrichtungen (20-28) ferner einen das Bodenniveau erfassenden Sensor (23-26) aufweisen, der oberhalb einer Radspur angeordnet ist.

10. Gerätesystem nach einem der Ansprüche 1 bis 9,
**dadurch gekennzeichnet,**
**dass** die Sensoreinrichtungen (20-28) einen die Lage des Geräteträgerfahrzeugs (1) erfassenden Lagesensor (27) aufweisen.

11. Gerätesystem nach einem der Ansprüche 1 bis 10,
**dadurch gekennzeichnet,**
**dass** die Mittel (30-35) zur automatischen Anpassung der Arbeitsposition des Bearbeitungselements (10,11,14,15,18,19) eine Signale mehrerer Sensoren gleichzeitig in Echtzeit verarbeitende Steuereinrichtung (29) umfassen.

## Claims

1. Device system for connection to a device carrier vehicle (1) able to be used between rows of plants (6, 7) in viticulture and fruit cultivation, having at least one processing device (8, 9, 12, 13, 16, 17) that has a processing element (10, 11, 14, 15, 18, 19), whose operating position is able to be adjusted with respect to the device carrier vehicle (1), and having means (30-35), comprising sensor devices (20-28), for the fully automatic adjustment of the operating position of the processing element (10, 11, 14, 15, 18, 19) to changes in the required operating position due to the movement of the device carrier vehicle (1) between the rows of plants (6, 7) due to deviations in the positions of the plants from the alignment (40) of the rows of plants (6, 7), wherein the sensor devices (20-28) are intended to detect positions of the plants in relation to the device carrier vehicle (1) and also to detect the changes in the position of the device carrier vehicle (1) that have taken place since the time at which the respective plant positions were detected, and wherein the automatic adjustment means (30-35) comprise devices for controlling the operating position of the processing element (10, 11, 14, 15, 18, 19), including control on the basis of the determined changes in the position of the device carrier vehicle,
**characterized in that**
the sensor devices (20-28) comprise a sensor (20) for scanning a region in the direction of travel in front of the device carrier vehicle (1) while detecting both rows of plants (6, 7) and determining the positions of the plant stems in the rows of plants at soil level, and while determining complete soil profiles, and **in that** the automatic adjustment means (30-35) furthermore comprise a control device (29) that temporarily stores the position measurement values and soil profiles.

2. Device system according to Claim 1,
**characterized in that**
the sensor devices (20-28) are intended to contactlessly detect the positions of the plants, in particular to contactlessly detect the soil profiles.

3. Device system according to Claim 2,
**characterized in that**
the sensor devices (20-28) are intended to contactlessly detect the positions of the plants, in particular detect soil profiles, through the reflection of electromagnetic waves, for example light waves and/or radar waves.

4. Device system according to one of Claims 1 to 3,
**characterized in that**
the sensor devices (20-28) are furthermore intended to detect the positions of the plants by detecting the position of tensioning wires running along the rows of plants (6, 7) and/or markers attached to the plants.

5. Device system according to Claim 4,
**characterized in that**
the sensor devices (20-28) are intended to detect electromagnetic waves that are reflected from the tensioning wires and/or markers and/or that are actively emitted.

6. Device system according to one of Claims 1 to 5,
**characterized in that**
the sensor devices (20-28) comprise a sensor (20) attached to the front side of the device carrier vehicle (1), preferably in the centre of the vehicle.

7. Device system according to one of Claims 1 to 6,
**characterized in that**
the sensor devices (20-28) include a sensor (28) that detects the path covered by the device carrier vehicle (1) and possibly that detects the steering lock.

8. Device system according to one of Claims 1 to 7,
**characterized in that**
the sensor devices (20-28) furthermore comprise a sensor (21-26), installed directly at the processing device (8, 9, 12, 13, 16, 17) with respect to the direction of travel, for detecting the soil level.

9. Device system according to one of Claims 1 to 8,
**characterized in that**
the sensor devices (20-28) furthermore include a sensor (23-26) that detects the soil level and is arranged above a wheel track.

10. Device system according to one of Claims 1 to 9,
**characterized in that**
the sensor devices (20-28) include a position sensor (27) that detects the position of the device carrier vehicle (1).

11. Device system according to one of Claims 1 to 10,
**characterized in that**
the means (30-35) for automatically adjusting the operating position of the processing element (10, 11, 14, 15, 18, 19) comprise a control device (29) that processes signals from a plurality of sensors simultaneously in real time.

## Revendications

1. Système d'appareil destiné à être accouplé à un véhicule porte-appareil (1) utilisable entre des rangées de plantes (6, 7) dans la viticulture et l'arboriculture fruitière, comportant au moins un appareil de traitement (8, 9, 12, 13, 16, 17) qui présente un élément de traitement (10, 11, 14, 15, 18, 19) dont la position de travail est réglable par rapport au véhicule porte-appareil (1), et comportant des moyens (30 - 35) pourvus d'éléments capteurs (20 - 28) et destinés à l'adaptation entièrement automatique de la position de travail de l'élément de traitement (10, 11, 14, 15, 18, 19) à des modifications de la position de travail requise en raison de la progression du véhicule porte-appareil (1) entre les rangées de plantes (6, 7) à cause d'écarts des positions des plantes par rapport à la ligne d'alignement (40) des rangées de plantes (6, 7),
dans lequel
les éléments capteurs (20 - 28) sont prévus pour détecter des positions des plantes par rapport au véhicule porte-appareil (1) et en outre pour détecter les modifications de la position du véhicule porte-appareil (1) depuis l'instant de la détection des positions de plantes respectives, et
les moyens (30 - 35) destinés à l'adaptation automatique comprennent des moyens de commande de la position de travail de l'élément de traitement (10, 11, 14, 15, 18, 19), y compris la commande basée sur les modifications déterminées de la position du véhicule porte-appareil,
**caractérisé en ce que**
les éléments capteurs (20 - 28) comprennent un capteur (20) pour balayer une zone située devant le véhicule porte-appareil (1) en direction de progression en détectant les deux rangées de plantes (6, 7) et en déterminant les positions des troncs de plantes des rangées de plantes dans le plan du sol et en déterminant des profils de sol complets, et **en ce que**
les moyens (30 - 35) d'adaptation automatique comprennent en outre un moyen de commande (29) qui mémorise les valeurs de mesure de position et les profils de sol.

2. Système d'appareil selon la revendication 1,
**caractérisé en ce que**
les éléments capteurs (20 - 28) sont prévus pour la détection sans contact physique des positions des plantes, en particulier pour la détection sans contact physique des profils de sol.

3. Système d'appareil selon la revendication 2,
**caractérisé en ce que**
les éléments capteurs (20 - 28) sont prévus pour la détection sans contact physique des positions des plantes, en particulier pour la détection des profils de sol, par réflexion d'ondes électromagnétiques, par exemple d'ondes lumineuses et/ou de radar.

4. Système d'appareil selon l'une des revendications 1 à 3,
**caractérisé en ce que**
les éléments capteurs (20 - 28) sont en outre prévus pour la détection des positions des plantes en se basant sur une détection de la position de fils de haubanage s'étendant le long des rangées de plantes (6, 7) et/ou de marquages montés sur les plantes.

5. Système d'appareil selon la revendication 4,
**caractérisé en ce que**
les éléments capteurs (20 - 28) sont prévus pour la détection d'ondes électromagnétiques réfléchies et/ou émises de façon active par les fils de haubanage et/ou par les marquages.

6. Système d'appareil selon l'une des revendications 1 à 5,
**caractérisé en ce que**
les éléments capteurs (20 - 28) comprennent un capteur (20) monté sur le côté avant du véhicule porte-appareil (1), de préférence au milieu du véhicule.

7. Système d'appareil selon l'une des revendications 1 à 6,
**caractérisé en ce que**
les éléments capteurs (20 - 28) comprennent un capteur (28) qui détecte le trajet parcouru par le véhicule porte-appareil (1) et le cas échéant le braquage.

8. Système d'appareil selon l'une des revendications 1 à 7,
**caractérisé en ce que**
les éléments capteurs (20 - 28) comprennent en outre un capteur (21 - 26) agencé directement au niveau de l'appareil de traitement (8, 9, 12, 14, 16, 17) par rapport à la direction de progression et destiné à détecter le niveau du sol.

9. Système d'appareil selon l'une des revendications 1 à 8,
**caractérisé en ce que**
les éléments capteurs (20 - 28) comprennent en outre un capteur (23 - 26) qui détecte le niveau du sol et qui est agencé au-dessus d'un passage de roue.

10. Système d'appareil selon l'une des revendications 1 à 9,
**caractérisé en ce que**
les éléments capteurs (20 - 28) comprennent un capteur de position (27) qui détecte la position du véhicule porte-appareil (1).

11. Système d'appareil selon l'une des revendications 1 à 10,
**caractérisé en ce que**
les moyens (30 - 35) destinés à l'adaptation automatique de la position de travail de l'élément de traitement (10, 11, 14, 15, 18, 19) comprennent un moyen de commande (29) qui traite les signaux de plusieurs capteurs simultanément en temps réel.
